# EUROPEAN PATENT APPLICATION

(11) **EP 2 134 069 A1**
(43) Date of publication of application: **16.12.2009**
(21) Application number: 08158103.5
(22) Date of filing: 12.06.2008
(51) Int. Cl.: H04M 19/04, H04M 1/725

(54) **User interface for previewing notifications**

(71) Applicant: Research In Motion Limited, Waterloo, Ontario N2L 3W8 (CA)
(72) Inventor: Vander Veen, Raymond, Waterloo Ontario N2V 2M6 (CA); Klassen, Gerhard D, Waterloo, Ontario N2T 1H7 (CA)
(74) Representative: MERH-IP Matias Erny Reichl Hoffmann

(57) **Abstract**

An electronic device and a method implemented within the electronic device for configuring parameters of a notification setting comprising at least two of auditory, visual and tactile notifications for association with specific events on the electronic device; generating a window display having a first area thereof with multiple selectable fields depicting the aforenoted parameters, and a second area having an icon; and previewing the notification setting via at least two of said audio output, visual output and tactile output responsive to selection of the icon.

## Description

The present specification relates generally to electronic devices, and in particular to a method and user interface for previewing notification settings in an electronic device.

It is known in the art to provide customizable notifications for events on an electronic device, such as a wireless communication device (e.g. portable phone, smart phone, PDA, etc). More particularly, various combinations and settings of auditory, visual and tactile notifications may be associated with specific events. For example, various combinations of ring tones, vibration modes, message light flashing, etc. may be selected for notification of specific events such as incoming calls and emails, appointments, tasks, etc. Such combinations and settings may be saved according to various profiles, such as loud, vibrate, quiet, normal, phone only, etc. Thus, an electronic device may be programmed with specific settings of volume, vibration, message light flashing associated with a particular event (e.g. incoming email) and/or state of the device (e.g. in holster), which settings may then be saved in a notification profile (e.g. Email - Default).

Although it is known in the art to preview audio ring tones prior to selection thereof, it has not hitherto been known to provide any mechanism for previewing a configuration of auditory, visual and tactile settings (e.g. ring tone and/or vibration mode and/or message light flashing) to ensure appropriateness or adequacy of the configuration for a particular use or profile. Thus, it is desirable to provide a simple and user-friendly mechanism for previewing such configurations of notification settings prior to selection thereof.

### GENERAL

In general, a method and a user interface are set forth for previewing notification settings in an electronic device, such as a wireless communication device.

According to one aspect, there may be provided a method of operating an electronic device, comprising: configuring parameters of a notification setting comprising at least two of auditory, visual and tactile notifications for association with specific events on said electronic device; generating a window display having a first area thereof with multiple selectable fields depicting said parameters, and a second area having an icon for previewing said notification setting; and previewing said notification setting via at least two of said audio output, visual output and tactile output responsive to selection of said icon.

According to another aspect, there may be provided a user interface for an electronic device, comprising: at least one input device; at least one audio output; at least one visual output; at least one tactile output; and a window display generated responsive to a first input to said at least one input device, said window display having a first area thereof with multiple selectable fields for configuring parameters of a notification setting comprising at least two of auditory, visual and tactile notifications for association with specific events on said electronic device, and a second area having an icon selectable by a second input to said at least one input device for previewing said notification setting via at least two of said audio output, visual output and tactile output.

### BRIEF DESCRIPTION OF THE DRAWINGS

The embodiments will be better understood with reference to the following Figures in which like numerals denote like parts and in which:

Figure 1 is a simplified block diagram of a wireless communication system;

Figure 2 is a block diagram of components of a portable electronic device;

Figures 3A-3C are screen shot representations of a graphical user interface of the portable electronic device in Figure 2 for previewing notification settings, according to an embodiment; and

Figure 4 is a flowchart showing a method of operating an electronic device for previewing notification settings, according to the embodiment of Figures 3A -3C.

### DESCRIPTION OF PREFERRED EMBODIMENTS

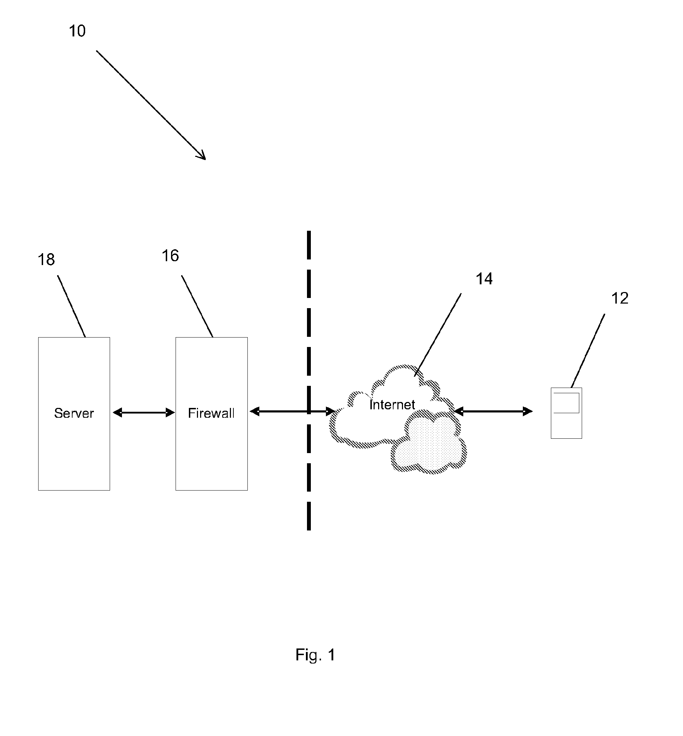

Figure 1 is a simplified block diagram of an exemplary communication system 10 for an electronic device 12, such as a wireless communication device. According to a non-limiting embodiment, the electronic device 12 is operable to effect communications over a radio communications channel and communicates with a base station (not shown) while located within a coverage area that is defined by the base station. However, the portable electronic device 12 is not limited to a device capable of effecting communications. Indeed, the exemplary method of previewing notification settings set forth in greater detail below, may advantageously be implemented within a multitude of devices, some of which are capable of communications and others of which are not (e.g. portable entertainment devices, PDAs, mobile phones, smart telephones, laptop computers, etc.).

In the illustrated embodiment, the base station (not shown) is part of a wireless network that is in communication with the Internet 14. Data is delivered to the electronic device 12 via wireless transmission from the base station. Similarly, data is sent from the electronic device 12 via wireless transmission to the base station.

It will be appreciated that the electronic device 12 of Figure 1 is movable within a coverage area of the base stations and can be moved to coverage areas defined by other base stations. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A server 18 handles wireless client requests from the electronic device 12. A firewall, or proxy server, 16, is provided between the server 18 and the Internet 14. The server 18 further operates as a Mail Server, which communicates with an email client of the electronic device 12 to allow a user to send and receive email messages.

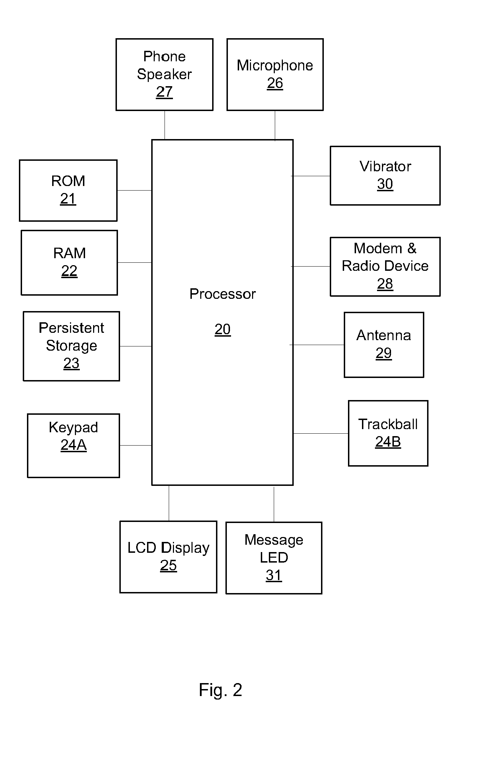

Figure 2 is a block diagram showing certain components within an exemplary embodiment of the electronic device 12. The electronic device 12 includes a processor 20 connected to a read-only-memory (ROM) 21 that contains a plurality of applications executable by the processor 20 for enabling the electronic device 12 to perform certain functions including, for example, Personal Identification Number (PIN) message functions, Short Message Service (SMS) message functions, address book and calendaring functions, camera functions, and cellular telephone functions. More particularly, processor 20 may execute applications within ROM 21 for notifying the user of events such as incoming calls and/or emails, appointments, tasks, etc., as hereinbefore described. The processor 20 is also connected to a random access memory unit (RAM) 22 and a persistent storage device 23 to facilitate various non-volatile storage functions of the electronic device 12. The processor 20 receives input from one or more input devices, including a keypad 24A and trackball 24B. The processor 20 outputs to one or more visual output devices, including a Liquid Crystal Display (LCD) display 25 and a message lamp or LED 31, and one or more audio output devices such as phone speaker 27, as well as to a vibrator 30, for tactile notification of device events, such as incoming calls or emails, etc., by vibrating the device 12, in a well known manner. The device 12 includes a microphone 26 connected to the processor 20 for providing cellular telephone functions in association with phone speaker 27. The processor 20 is also connected to a modem and radio device 28. The modem and radio device 28 is used to connect to wireless networks and transmit and receive voice and data communications through an antenna 29. Other devices and features may be provided, such as a camera (not shown) for taking pictures that can be viewed on display 25, sent to other users via wireless email, saved to persistent storage 23 for later viewing, etc.

In the context of this specification and the exemplary embodiment illustrated in the drawings, "user interface" comprises an input device (such as keypad 24A, trackball 24B, etc.) and at least one graphical window displayed via an output device (such as display 25).

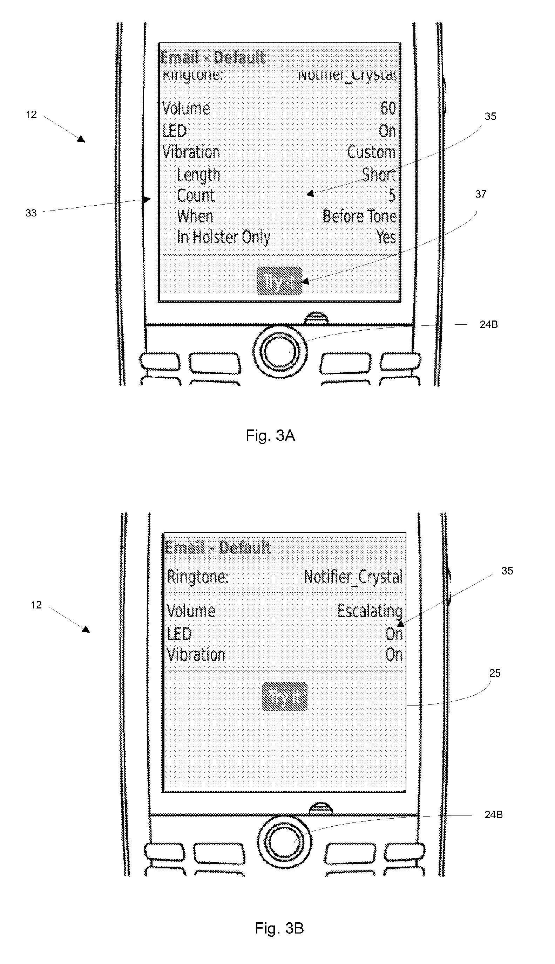

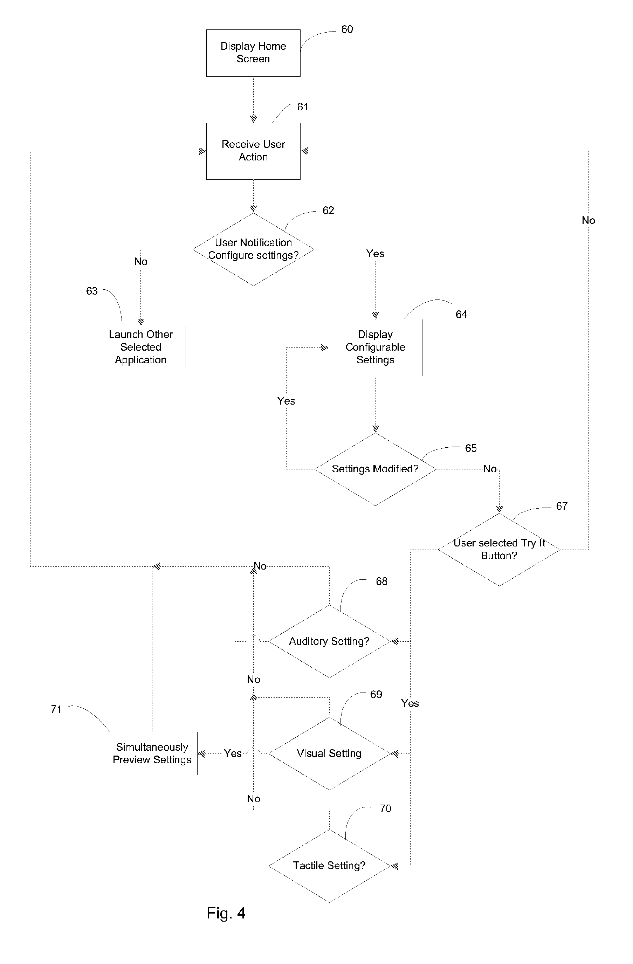

According to a first aspect of this detailed description, as shown in Figures 3A -3C and as further depicted in Figure 4, electronic device 12 may be used to create customizable configurations of auditory, visual and tactile notifications for association with events such as incoming calls or emails, calendar notifications, task reminders, etc.

With reference to Figure 4, in an idle or default state for device 12, a home screen window (not shown) is displayed (60) from which a user may launch various applications by selecting associated icons on display 25. Upon making a selection (61), a determination is made (62) as to whether the user has selected to configure notification settings. If not, the device 12 launches another application associated with the user selected icon (63). If the user has selected to configure notification settings, a window (33) is displayed (64) as shown in Figure 3A. A person of skill in the art will appreciate that user selection (61) may comprise one input or several inputs to the input device(s) (keypad 24A, trackball 24B, etc.) through a menu tree of multiple selections to arrive at the window (33).

According to a non-limiting embodiment, user interface window (33) includes a first area thereof (35) having multiple selectable fields for configuring a notification setting comprising an auditory notification (ringtone), a visual notification (LED), and a tactile notification (vibration), and a second area having an icon such as an input button (37) for previewing the notification setting shown in the first window area (35). In the illustrated embodiment, a ring tone: Notifier_Crystal has been selected with a volume value of "60", the message LED is indicated as being active and a custom vibration mode has been selected for operation only when the device 12 is in its holster, with a "short" vibration length of "5" prior to playing the ring tone.

Preferably, the input button (37) includes text for encouraging selection thereof (e.g. "Try It").

In response to a further user input a determination is made (65) as to whether the user has modified any parameters of the settings in the first window area (35) and, if not, a determination is made (67) whether the user has activated the input button (37) for previewing the notification setting shown in the first window area (35).

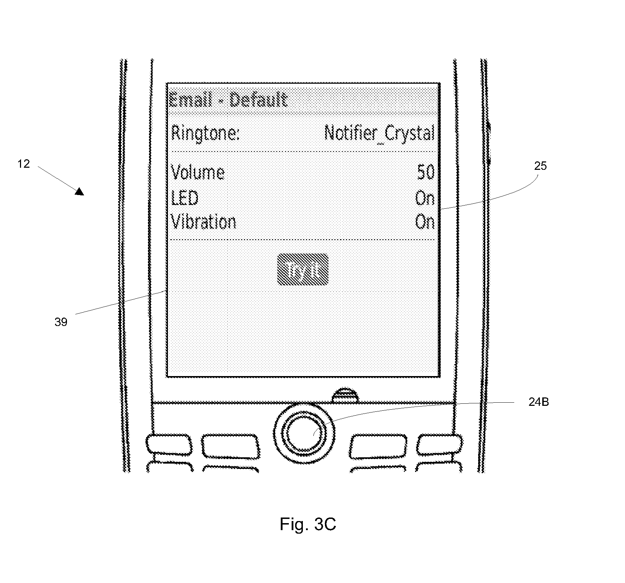

In the event the user has modified any parameters of the settings (i.e. "Yes at 65), then the window (33) is updated and displayed (64) to reflect the new parameters. For example, in Figure 3B, the volume of the ring tone has been changed to "Escalating", while in the example of Figure 3C, the volume has been set to "50" with LED and vibration mode both being "On".

In the event the user has activated the input button (i.e. a "Yes" at 67), then determinations are made (68, 69, 70) as to whether any of the auditory, visual or tactile settings have been enabled. If so (i.e. a "Yes" at any of 68, 69 or 70), the device 12 previews the selected parameter settings (71) by simultaneously playing any selected ring tone through the phone speaker (27) according to any set parameters (e.g. volume), flashing the message light (31) according to any set parameters (e.g. on/off durations, etc), and/or vibrating the device via the vibrator (30) according to any set parameters (e.g. number and duration of vibration pulses, etc.).
Specific embodiments have been shown and described herein. However, modifications and variations may occur to those skilled in the art. For example, as discussed above, although the exemplary embodiment has been described in terms of implementation on a portable handheld electronic device, the principles set forth herein may be applied to other devices such as desktop computers, etc. All such modifications and variations are believed to be within the sphere and scope of this specification.

## Claims

1. A user interface for an electronic device (12), comprising:
at least one input device (24B);
at least one audio output (27);
at least one visual output (31);
at least one tactile output (30);
a window display (33) generated responsive to a first input (61) to said at least one input device (24B), said window display having a first area (35) thereof with multiple selectable fields for configuring parameters of a notification setting comprising at least two of auditory, visual and tactile notifications for association with specific events on said electronic device, and a second area having an icon (37) selectable by a second input (67) to said at least one input device (24B) for previewing said notification setting (71) via at least two of said audio output (27), visual output (31) and tactile output (30).

2. A user interface as claimed in claim 1, wherein said specific events comprise any one or more of calendar appointments, incoming calls, incoming emails, and task reminders.

3. A user interface as claimed in claim 1 or claim 2, wherein said icon is a button on said window display.

4. A user interface as claimed in claim 3, wherein said button has text to encourage selection of said icon.

5. A user interface as claimed in any one or more of claims 1 to 4, wherein said auditory notification comprises playing of a ring tone via said audio output (27).

6. A user interface as claimed in any one or more of claims 1 to 4, wherein said visual notification comprises flashing of said visual output (31).

7. A user interface as claimed in any one or more of claims 1 to 4, wherein said tactile notification comprises vibration of said electronic device via said tactile output (30).

8. A method of operating an electronic device (12), comprising:
configuring parameters of a notification setting (61) comprising at least two of auditory, visual and tactile notifications for association with specific events on said electronic device;
generating a window display (33) having a first area (35) thereof with multiple selectable fields depicting said parameters, and a second area having an icon (37) for previewing said notification setting; and
previewing said notification setting (71) via at least two of said audio output, visual output and tactile output responsive to selection of said icon (37).

9. A method as claimed in claim 8, wherein said specific events are any one or more of calendar appointments, incoming calls, incoming emails, and task reminders.

10. A method as claimed in claim 10, wherein said button has text to encourage selection of said icon.

11. A method as claimed in any one or more of claims 8 to 10, wherein said auditory notification is playing of a ring tone.

12. A method as claimed in any one or more of claims 8 to 10, wherein said visual notification is flashing of a message lamp (31).

13. A method as claimed in any one or more of claims 8 to 10, wherein said tactile notification is vibration of said electronic device.

14. An electronic device (12) having a user interface as claimed in any one of claims 1 to 7.

15. A computer readable medium containing computer-executable instructions that, when performed by a processor (20) of an electronic device (12), cause said electronic device (12) to implement the steps of the method of any one of claims 8 to 14.

## Amended claims

### Amended claims in accordance with Rule 137(2) EPC.

**1.** A user interface for an electronic device (12), comprising:
at least one input device (24B);
at least one audio output (27);
at least one visual output (31);
at least one tactile output (30);
a window display (33) generated responsive to a first input (61) to said at least one input device (24B), said window display having a first area (35) thereof with multiple selectable fields for configuring parameters of a notification setting comprising auditory, visual and tactile notifications for association with specific events on said electronic device, said multiple selectable fields comprising at least one selectable field for configuring each of said auditory, visual and tactile notifications, and a second area having an icon (37) selectable by a second input (67) to said at least one input device (24B) for previewing said notification setting (71) via said audio output (27), visual output (31) and tactile output (30).

**2.** A user interface as claimed in claim 1, wherein said specific events comprise any one or more of calendar appointments, incoming calls, incoming emails, and task reminders.

**3.** A user interface as claimed in claim 1 or claim 2, wherein said icon is a button on said window display.

**4.** A user interface as claimed in claim 3, wherein said icon has text to encourage selection of said icon.

**5.** A user interface as claimed in any one or more of claims 1 to 4, wherein said auditory notification comprises playing of a ring tone via said audio output (27).

**6.** A user interface as claimed in any one or more of claims 1 to 4, wherein said visual notification comprises flashing of said visual output (31).

**7.** A user interface as claimed in any one or more of claims 1 to 4, wherein said tactile notification comprises vibration of said electronic device via said tactile output (30).

**8.** A method of operating an electronic device (12), comprising:
configuring parameters of a notification setting (61) comprising auditory, visual and tactile notifications for association with specific events on said electronic device;
generating a window display (33) having a first area (35) thereof with multiple selectable fields depicting said parameters said multiple selectable fields comprising at least one selectable field for configuring each of said auditory, visual and tactile notifications, and a second area having an icon (37) for previewing said notification setting; and
previewing said notification setting (71) via an audio output, visual output and tactile output responsive to selection of said icon (37).

**9.** A method as claimed in claim 8, wherein said specific events are any one or more of calendar appointments, incoming calls, incoming emails, and task reminders.

**10.** A method as claimed in claim 9, wherein said icon has text to encourage selection of said icon.

**11.** A method as claimed in any one or more of claims 8 to 10, wherein said auditory notification is playing of a ring tone.

**12.** A method as claimed in any one or more of claims 8 to 10, wherein said visual notification is flashing of a message lamp (31).

**13.** A method as claimed in any one or more of claims 8 to 10, wherein said tactile notification is vibration of said electronic device.

**14.** An electronic device (12) having a user interface as claimed in any one of claims 1 to 7.

**15.** A computer readable medium containing computer-executable instructions that, when performed by a processor (20) of an electronic device (12), cause said electronic device (12) to implement the steps of the method of any one of claims 8 to 13.
